# EUROPÄISCHE PATENTSCHRIFT

(11) **EP 3 156 279 B1**
(45) Veröffentlichungstag und Bekanntmachung des Hinweises auf die Patenterteilung: **27.11.2019**
(21) Anmeldenummer: 15189342.7
(22) Anmeldetag: 12.10.2015
(51) Int. Cl.: B60P 1/00, B60R 3/02

(54) **FAHRZEUG FÜR DEN TRANSPORT VON TRANSPORTGÜTERN**
VEHICLE FOR THE TRANSPORT OF TRANSPORT GOODS
VEHICULE AUTOMOBILE POUR LE TRANSPORT DE MARCHANDISES

(43) Veröffentlichungstag der Anmeldung: 19.04.2017
(73) Patentinhaber: Schmitz Cargobull AG, 48341 Altenberge (DE)
(72) Erfinder: Fischer, Jan, 48151 Münster (DE)
(74) Vertreter: Cohausz & Florack

(56) Entgegenhaltungen:
- EP-A2- 2 385 211
- DE-U- 6 933 420
- US-A1- 2014 345 974

## Beschreibung

Die Erfindung betrifft ein Fahrzeug für den Transport von Transportgütern, wobei das Fahrzeug ein Chassis umfasst, das mindestens ein der Rückseite des Fahrzeugs zugeordnetes Bauteil aufweist und an seiner Oberseite einen Ladeboden trägt, auf dem das jeweilige Transportgut abstellbar ist. An dem Chassis ist zusätzlich eine unterhalb des Ladebodens angeordnete Ausziehleiter vorgesehen, die in einer ebenfalls von dem Chassis getragenen Führung verschiebbar gelagert ist. Die Führung dient dazu, die Ausziehleiter aus einer Aufbewahrungsstellung, in der sie sich unterhalb des Ladebodens befindet, in eine Gebrauchsstellung zu bringen, in der sie zum Untergrund, auf dem das Fahrzeug steht, geklappt ist, um einen Aufstieg auf den Ladeboden zu ermöglichen. Dabei ist die Ausziehleiter in einen ein Führungsteil und einen Ausziehleitersprossen aufweisenden Aufstiegsteil unterteilt, von denen der Führungsteil in der Führung und das Aufstiegsteil an dem Führungsteil verschiebbar gelagert ist. Gleichzeitig ist am Führungsteil im Bereich des Endabschnitts, in dem sich das dem Führungsteil zugeordnete Ende des Aufstiegsteils befindet, wenn das Aufstiegsteil seine maximale Auszugsstellung in dem Führungsteil erreicht hat, ein Schwenklager für die Verschwenkung des Aufstiegsteil in seine Gebrauchsstellung ausgebildet. Die EP 2 385 211 A2 offenbart ein solches Fahrzeug.

Bei Fahrzeugen der hier in Rede stehenden Art handelt es sich insbesondere um nicht selbstfahrende Anhänger oder Sattelauflieger, die jeweils an eine Zugmaschine angehängt werden, oder um selbstfahrende Lastkraftwagen, die jeweils einen eigenen Ladeboden für das zu transportierende Gut besitzen.

Die bei solchen Fahrzeugen vorgesehene Ausziehleiter soll dem Nutzer einen gefahrlosen Aufstieg auf die Ladefläche ermöglichen, um dort Service- oder Kontrollarbeiten, wie beispielsweise die Kontrolle und das Nachspannen der sicheren Verzurrung des Transportguts vorzunehmen. Die zweiteilige Ausführung der Ausziehleiter ermöglicht dabei die platzsparende Unterbringung in jeweils dem Bereich, in dem jeweils praktischerweise auf den Ladenboden gestiegen wird. Üblicherweise ist dies der Heckbereich des Fahrzeugs. In diesem Fall sind die Ausziehleitern üblicherweise in Längsrichtung des Fahrzeugs ausgerichtet unterhalb des Bodens montiert. Es ist jedoch auch denkbar, derartige Ausziehleitern an einer Längsseite des Fahrzeugs quer zur Fahrzeug-Längsausrichtung anzuordnen, um einen Aufstieg von der betreffenden Längsseite her zu ermöglichen.

Für den Aufstieg auf den Ladeboden wird das Führungsteil mit dem Aufstiegsteil der Ausziehleiter soweit unter dem Ladeboden hervorgezogen, bis das Führungsteil in der am Chassis vorgesehenen Führung einen Endanschlag erreicht. Dieser ist üblicherweise so bemessen, dass das Führungsteil mit einem Endabschnitt seitlich soweit über den Ladeboden hinaussteht, dass eine von dem Führungsteil an dessen dem Ladeboden zugeordneten Oberseite getragene Trittplatte freiliegt. Anschließend kann das Aufstiegsteil aus dem Führungsteil gezogen werden, bis das im Führungsteil verbleibende Ende des Aufstiegsteils das im freiliegenden Endbereich des Führungsteils ausgebildete Schwenkgelenk erreicht hat (s. Seite 107 der "Bedienungsanleitung S.CS S.PR Planenauflieger" deutsche Ausgabe, herausgegeben von der Schmitz Cargobull AG, S.CS-MAN-E0-6231-2014).

Bei den voranstehend erläuterten bekannten Ausziehleitern ist das Führungsteil im ausgezogenen Zustand auf einem Träger abgestützt, der bei einer rückseitigen Anordnung der Ausziehleiter beispielsweise den Abschluss des Chassis bildet. Praktische Erfahrungen zeigen hier, dass die Handhabung solcherart befestigter Ausziehleitern umständlich und die Abstützung des Führungsteils auf dem Träger dann unsicher sein kann, wenn der Untergrund uneben ist, auf dem das Aufstiegsteil in Gebrauchsstellung abgestützt ist.

Vor dem Hintergrund des voranstehend erläuterten Standes der Technik hat sich die Aufgabe gestellt, ein Fahrzeug zu schaffen, bei dem die Ausziehleiter vereinfacht handzuhaben und gleichzeitig eine verbesserte Standsicherheit gewährleistet ist.

Die Erfindung hat diese Aufgabe durch die in Anspruch 1 angegebene Ausgestaltung eines Fahrzeugs für den Transport von Transportgütern gelöst.

Vorteilhafte Ausgestaltungen der Erfindung sind in den abhängigen Ansprüchen angegeben und werden nachfolgend wie der allgemeine Erfindungsgedanke im Einzelnen erläutert.

Ein erfindungsgemäßes Fahrzeug für den Transport von Transportgütern weist demnach in Übereinstimmung mit dem voranstehend erläuterten Stand der Technik ein Chassis auf, das mindestens ein der Rückseite des Fahrzeugs zugeordnetes Bauteil umfasst und an seiner Oberseite einen Ladeboden trägt, auf dem das jeweilige Transportgut abstellbar ist, wobei an dem Chassis zusätzlich eine unterhalb des Ladebodens angeordnete Ausziehleiter vorgesehen ist, die in einer ebenfalls von dem Chassis getragenen Führung verschiebbar gelagert ist, um die Ausziehleiter aus einer Aufbewahrungsstellung, in der sie sich unterhalb des Ladebodens befindet, in eine Gebrauchsstellung zu bringen, in der sie zum Untergrund, auf dem das Fahrzeug steht, geklappt ist, um einen Aufstieg auf den Ladeboden zu ermöglichen, wobei die Ausziehleiter in einen ein Führungsteil und einen Ausziehleitersprossen aufweisenden Aufstiegsteil unterteilt ist, von denen der Führungsteil in der Führung und das Aufstiegsteil an dem Führungsteil verschiebbar gelagert ist, und wobei an dem Führungsteil im Bereich des Endabschnitts, in dem sich das dem Führungsteil zugeordnete Ende des Aufstiegsteils befindet, wenn das Aufstiegsteil seine maximale Auszugsstellung in dem Führungsteil erreicht hat, ein Schwenklager für die Verschwenkung des Aufstiegsteils in seine Gebrauchsstellung ausgebildet ist.

Erfindungsgemäß ist nun an dem Führungsteil ein Element, insbesondere ein Vorsprung, vorgesehen, das mit einem an dem Bauteil des Chassis ausgebildeten Gegenelement, insbesondere einem Anschlag, in Eingriff kommt, wenn der Führungsteil seine Auszugsstellung, insbesondere seine maximale Auszugsstellung, in der Führung erreicht hat, so dass das Führungsteil zusätzlich zu seiner Abstützung in der Führung bei in Gebrauchsstellung geschwenktem Aufstiegsteil an dem Bauteil hängt.

Der Erfindung liegt die Erkenntnis zu Grunde, dass eine frei hängende Abstützung, wie sie die Erfindung für den Führungsteil in Gebrauchsstellung vorsieht, gegenüber einer aufliegenden, beim Stand der Technik üblichen Abstützung den Vorteil hat, dass das Führungsteil auch dann immer noch sicher mit dem jeweiligen Bauteil des Chassis verkoppelt bleibt, wenn das Aufstiegsteil auf einem unebenen Untergrund abgestützt ist und das Führungsteil dementsprechend ungleichförmig belastet ist.

Auch erweist sich die Handhabung der Ausziehleiter bei einem erfindungsgemäßen Fahrzeug als besonders einfach, weil Führungs- und Aufstiegsteil der Ausziehleiter leicht gegriffen, bewegt und in ihrer Warte- oder Gebrauchsstellung fixiert werden können. Die Gefahr eines Verkeilens der beim Ausziehen oder Einschieben der Ausziehleiter relativ zueinander bewegten Teile in der ihnen jeweils zugeordneten Führung ist minimiert. So lässt sich insbesondere das "Anhängen" des Führungsteils an das jeweils hierfür vorgesehene Chassisbauteil auf einfache Weise bewerkstelligen.

Gleichzeitig bringt die erfindungsgemäße Ausgestaltung einer Ausziehleiter oder eines mit einer solchen Leiter ausgestatteten erfindungsgemäßen Fahrzeugs nur geringe Kosten mit sich, da keine Änderung bestehender Chassiskonstruktionen erforderlich ist, sondern an bekannten Chassis ohnehin vorhandene Bauteile genutzt werden, um die Ausziehleiter sicher abzustützen.

Die erfindungsgemäße Ausgestaltung eines Transportfahrzeugs eignet sich insbesondere für solche Anwendungen, bei denen die Ausziehleiter mit ihrer Führung in Längsrichtung des Fahrzeugs ausgerichtet ist, so dass die Auszugsrichtung der Ausziehleiter in Richtung des Hecks des Fahrzeugs gerichtet ist. Bei einer solchen Anordnung erfolgt der Aufstieg auf den Ladeboden von der Rückseite des Fahrzeugs her.

Als besonders praxisgerecht erweist sich die Erfindung dann, wenn als Bauteil, an dem das Element, insbesondere der Vorsprung, des Führungsteils der Ausziehleiter anschlägt, ein den rückseitigen Abschluss einer Tragstruktur des Chassis bildender Querträger gewählt wird. Solche Querträger weisen eine Steifigkeit und Tragfähigkeit auf, die sicher ausreicht, um auch das zusätzliche Gewicht der Ausziehleiter und einer auf ihr stehenden Person aufzunehmen. Dabei eignen sich insbesondere solche Querträger für die erfindungsgemäß hängende Ankopplung des Führungsteils der Ausziehleiter, die als ein Profil mit einem Stegteil und einem davon in Richtung der Vorderseite des Fahrzeugs abstehenden Gurtteil ausgebildet ist, der das Gegenelement, insbesondere den Anschlag, bildet, mit dem das Element, insbesondere der Vorsprung, des Führungsteils der Ausziehleiter in Eingriff kommt.

Grundsätzlich sind für die erfindungsgemäß hängende Ankopplung des Führungsteils der Ausziehleiter sämtliche Ausgestaltungen von Vorsprüngen geeignet, die sich durch das Zusammenwirken des Elements, insbesondere des Vorsprungs, mit einem entsprechenden Gegenelement, insbesondere einem Anschlag, am Chassisbauteil mechanisch form- oder kraftschlüssig verkoppeln lassen. Hierzu besonders geeignet ist ein Element, insbesondere ein Vorsprung, das bzw. der hakenförmig ausgebildet ist.

Das Auffinden der richtigen Ankopplungsposition bei in Gebrauchsstellung gezogenem Führungsteil und die Vermeidung eines unbeabsichtigten Lösens des Führungsteils aus der Verkopplung mit dem Bauteil des Chassis kann dadurch unterstützt werden, dass das Element, insbesondere der Vorsprung, nach Art einer Raste ausgebildet und an dem Bauteil eine Rastausnehmung, insbesondere eine Rastöffnung, vorgesehen ist, in die das Element, insbesondere der Vorsprung, einrastet, wenn das Führungsteil seine maximale Auszugsstellung erreicht hat.

Zum sicheren Halt des Führungsteils in der an das Chassisbauteil angekoppelten Stellung und zur gleichmäßigen Verteilung der bei der Benutzung der Ausziehleiter auf sie wirkenden Kräfte trägt es zudem bei, wenn das Führungsteil zwei parallel angeordnete und das Aufstiegsteil zwischen sich aufnehmende Führungsholme aufweist und an jeder dem Ladeboden zugeordneten Oberseite der Führungsholme ein Element, insbesondere ein Vorsprung, vorgesehen ist, der mit jeweils einem an dem Bauteil ausgebildeten Anschlag in Eingriff kommt, wenn das Führungsteil seine maximale Auszugsstellung in der Führung erreicht hat. Selbstverständlich können erforderlichenfalls weitere Vorsprünge oder andere Sicherungselemente vorgesehen sein, um die Verbindung zwischen dem Bauteil des Chassis und dem Führungsteil in dessen ausgezogener Gebrauchsstellung zu sichern.

Grundsätzlich kann die am Chassis des Fahrzeugs vorgesehene Führung, in der das Führungsteil mit dem Aufstiegsteil der Ausziehleiter verschoben werden kann, so ausgelegt werden, dass die Ausziehleiter in der Warteposition gehalten wird. Hierzu können beispielsweise durch eine elastische Vorbelastung sich selbsttätig verriegelnde Riegelelemente vorgesehen sein, die zum Ausziehen der Ausziehleiter manuell gezielt entriegelt werden. Eine demgegenüber vereinfachte Möglichkeit, die Ausziehleiter in ihrer Wartestellung zu halten, besteht darin, dass an dem Chassis ein weiterer Anschlag vorgesehen ist, mit dem das jeweilige Element, insbesondere der Vorsprung, in Eingriff kommt, wenn das Führungsteil in seine Endstellung geschoben ist.

Um sicherzustellen, dass die Ausziehleiter nicht über die vorgesehene Endposition hinaus aus der ihr zugeordneten Führung gezogen wird, kann an der Führung ein Endanschlag vorgesehen sein, gegen den ein Anschlagelement, das am Führungsteil im Bereich seines anderen, vom Endabschnitt mit dem Schwenklager abgewandten Endes vorgesehen ist, anschlägt, wenn das Führungsteil seine Auszugsstellung, insbesondere seine maximale Auszugsstellung, erreicht hat.

Der Gefahr eines unbeabsichtigten zu weiten Umschwenkens des Aufstiegsteils kann dadurch begegnet werden, dass an der vom Ladeboden abgewandten Seite im Bereich des mit dem Schwenklager versehenen Endabschnitts ein Stützanschlag vorgesehen ist, gegen den sich das Aufstiegsteil abstützt, wenn es in seine Gebrauchsstellung geschwenkt ist.

Auch bei einem erfindungsgemäßen Fahrzeug kann das Führungsteil an seiner dem Ladeboden zugeordneten Oberseite im Bereich des Endabschnitts, in dem sich das Schwenklager für das Aufstiegsteil befindet, problemlos ein Plattenelement tragen, das an seiner freien Oberseite eine Trittfläche bietet.

Nachfolgend wird die Erfindung anhand einer ein Ausführungsbeispiel zeigenden Zeichnung näher erläutert. Deren Figuren zeigen jeweils schematisch:

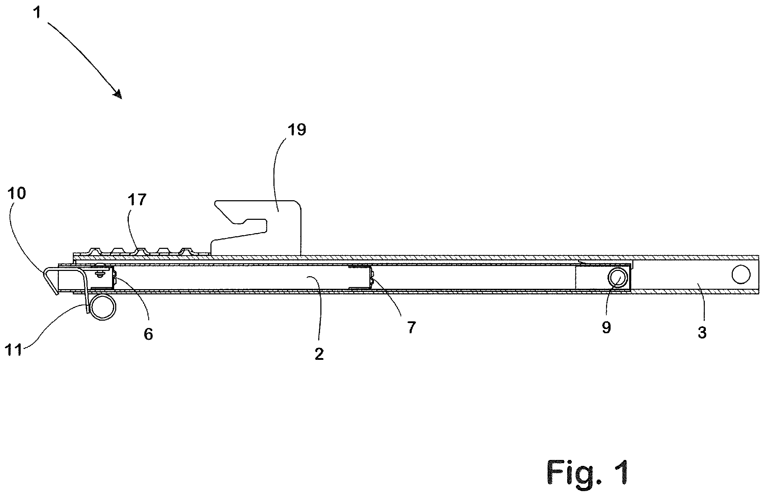

- Fig. 1: eine Ausziehleiter für ein Transportfahrzeug in seitlicher Ansicht;

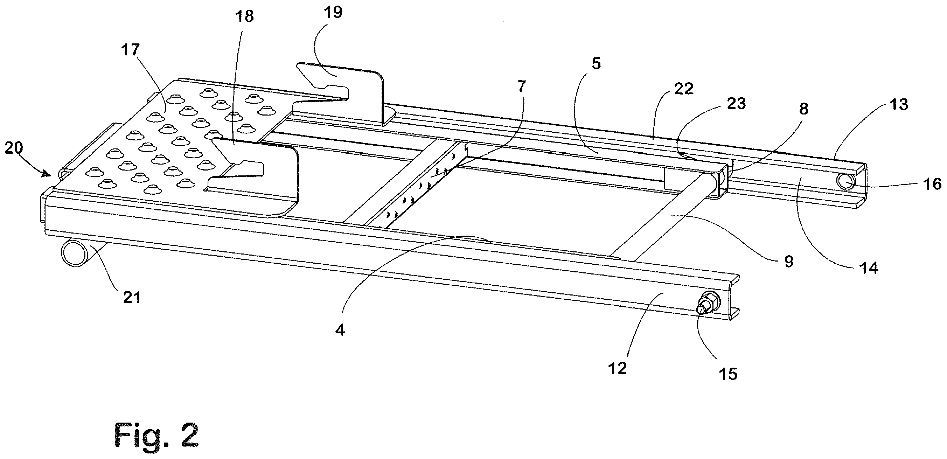

- Fig. 2: die Ausziehleiter in einer perspektivischen Ansicht von oben;

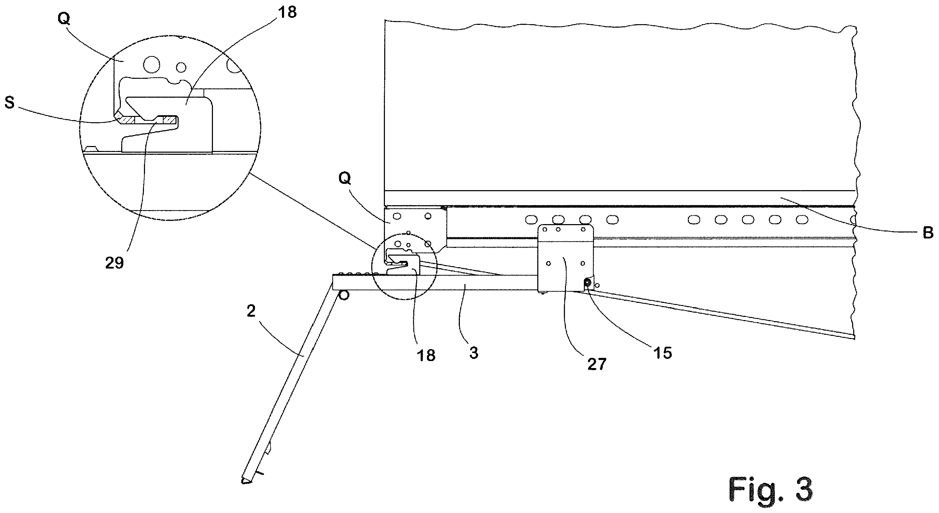

- Fig. 3: den Heckbereich eines Transportfahrzeugs mit der daran vorgesehenen Ausziehleiter in Gebrauchsstellung in einer seitlichen, teilweise aufgebrochenen Ansicht;

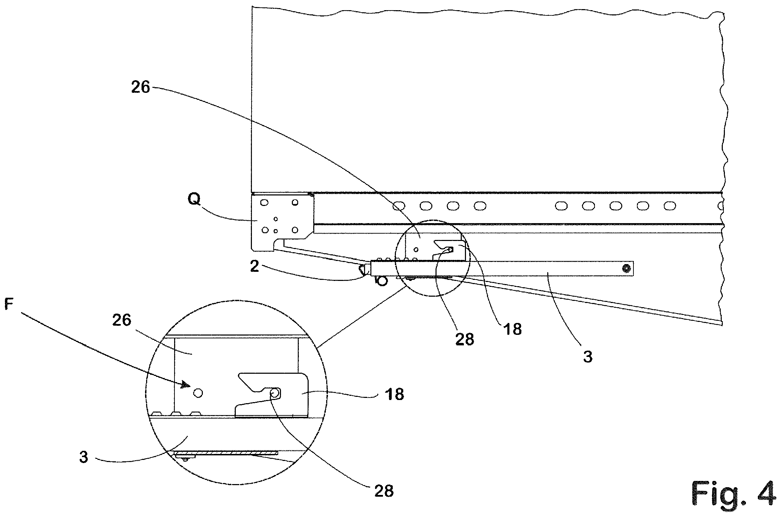

- Fig. 4: den Heckbereich eines Transportfahrzeugs mit der daran vorgesehenen Ausziehleiter in Wartestellung in einer Fig. 3 entsprechenden seitlichen, teilweise aufgebrochenen Ansicht;
- Fig. 5: ein Transportfahrzeug in einer perspektivischen Ansicht von hinten.

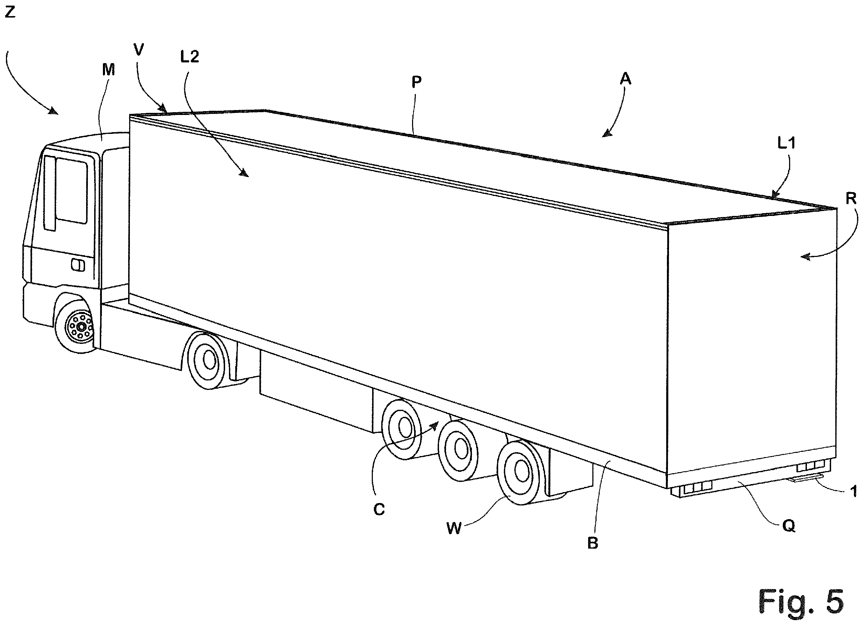

Als Beispiel für ein erfindungsgemäß ausgebildetes Fahrzeug ist in Fig. 5 ein Sattelauflieger A, in der Fachsprache auch "Trailer" genannt, dargestellt, der gemeinsam mit einer den Sattelauflieger A ziehenden Zugmaschine M einen Sattelzug Z bildet. Der Sattelauflieger A ist als Planenauflieger mit einem Planenaufbau P konzipiert, dessen Längsseiten L1, L2 und Rückseite R jeweils in an sich bekannter Weise mit einer Seitenplane bedeckt sind.

Der Planenaufbau P ist über einem Ladeboden B errichtet, der von einem Chassis C des Sattelaufliegers A getragen wird. Das Chassis C ist in ebenso an sich bekannter Weise durch zwei parallel und mit Abstand zueinander angeordnete und sich über die Länge des Sattelaufliegers A erstreckende, in Fig. 5 nicht sichtbare Längsträger gebildet, zwischen denen hier ebenfalls nicht sichtbare Querträger angeordnet sind, die quer zur Längserstreckung der Längsträger angeordnet sind. Den rückseitigen Abschluss des Chassis C bildet ein sich über die Breite B des Sattelaufliegers A erstreckender Abschlussquerträger Q, der als U-Profil ausgebildet ist. Der Basissteg des Abschlussquerträgers Q bildet dabei die der Rückseite R zugeordnete Rückwand des Abschlussquerträgers Q, wogegen die Schenkel S des Abschlussquerträgers Q in Richtung der der Zugmaschine M zugeordneten Vorderseite V des Sattelaufliegers A weisen.

An dem Chassis C sind in ebenso konventioneller Weise zudem drei Achsen mit Laufräderpaaren W gelagert.

Unter dem Ladeboden B ist an dem Chassis C in dessen rückseitigen Endbereich eine Ausziehleiter 1 vorgesehen, die in einer Führung F in Längsrichtung des Sattelaufliegers A verschiebbar gehalten ist.

Die Ausziehleiter 1 ist in ein Ausziehteil 2 und ein Führungsteil 3 geteilt.

Das Ausziehteil 2 ist dabei nach Art einer Leiter mit zwei parallel und mit Abstand zueinander angeordneten Holmen 4,5 und zwischen den Holmen 4,5 sich erstreckenden Tritt-Sprossen 6,7 ausgebildet. An ihrem hinteren Endabschnitt tragen die Holme 4,5 seitlich von ihnen abstehende Zapfen 8. Zwischen den Zapfen 8 erstreckt sich ein Rohr 9, das im Bereich dieses Endabschnitts die Holme 4,5 in dem vorbestimmten, durch die Tritt-Sprossen 6 definierten Abstand hält. An seinem gegenüberliegenden vorderen Endabschnitt weist das Aufstiegsteil 2 dagegen eine im Gebrauch unterste Tritt-Sprosse 6 auf, an der ein Handgriff 10 befestigt ist. Der Handgriff 10 steht von der untersten Tritt-Sprosse 6 in der zum Rohr 9 entgegengesetzten Richtung vor, so dass er von einem Nutzer frei gegriffen werden kann. Gleichzeitig weist der Handgriff 10 eine von der Längsseite der untersten Tritt-Sprosse 6 abstehende Verlängerung 11 auf. Die Holme 4,5 stehen in ihrer Längsrichtung gesehen über den Handgriff 10 hinaus. Ihre freien Enden bilden dort die Füße, auf denen das Aufstiegsteil 2 steht, wenn sich das Aufstiegsteil 2 in Aufstiegsstellung befindet.

Das Führungsteil 3 besitzt zwei als U-Profile ausgebildete Führungsschienen 12,13, die mit einem Abstand zueinander angeordnet sind, der größer ist als der Abstand der Zapfen 8 des Ausziehteils 2. Die Führungsschienen 12,13 sind dabei so zueinander angeordnet, dass die von ihnen begrenzten Führungsnuten 14 gegeneinander gerichtet sind und das Ausziehteil 2 mit seinen Zapfen 8 in ihnen mit Spiel in Längsrichtung der Führungsschienen 12,13 verschiebbar ist.

An ihrem hinteren Endabschnitt trägt das Führungsteil 3 seitlich vorstehende Anschlagzapfen 15,16. Im Bereich seines vorderen Endabschnitts ist dagegen auf seine Oberseite eine gelochte Platte 17 aufgelegt, die seitlich auf den Führungsschienen 12, 13 abgestützt ist und mit ihrem vorderen Rand an den vorderen Rand der Führungsschienen 12,13 grenzt. An ihrem den Anschlagzapfen 15, 16 zugeordneten Randbereich sind zwei Abschnitte der Platte 17 bezogen auf die Gebrauchsstellung der Ausziehleiter 1 derart nach oben, d.h. in Richtung des Ladebodens B, abgekantet, dass sie senkrecht von der Oberseite des Führungsteils 3 abstehende und parallel zueinander angeordnete Vorsprünge 18, 19 bilden. Diese Vorsprünge 18, 19 sind dabei hakenartig nach Art von Rasten ausgebildet, deren Hakenöffnungen in Richtung der Platte 17 und damit einhergehend in Richtung des vorderen Rands 20 des Führungsteils 3 geöffnet sind. Im Bereich des vorderen Endes des Führungsteils 3 ist zusätzlich an der Unterseite des Führungsteils 3 ein sich über die Breite des Führungsteils 3 erstreckendes Stützrohr 21 befestigt. In den Führungsnuten der Führungsschienen 12,13 ist an der Stelle, in der sich die Zapfen 8 befinden, wenn das Aufstiegsteil 2 maximal weit in das Führungsteil 3 eingeschoben ist, an der seiner jeweiligen Führungsnut 14 zugeordneten Seite des oberen Schenkels 22 der Führungsschienen 12,13 eine Anlaufschräge 23 vorgesehen, durch die die lichte Weite der Führungsnut 14 in diesem Bereich so stark abnimmt, dass die Zapfen 8 des Aufstiegsteils 2, wenn es seine Endposition in der Wartestellung erreicht hat, mit so hoher Reibung in der Führungsnut 14 gehalten ist, dass ein selbsttätiges Lösen des Aufstiegsteils 2 aus seiner Wartestellung verhindert ist.

Durch Aufbringen einer ausreichenden Zugkraft kann das Aufstiegsteil 2 aus dem Führungsteil 3 herausgezogen werden, bis seine Zapfen 8 den vorderen Endabschnitt der Führungsschienen 12,13 des Führungsteils 3 erreichen. Sobald dies erfolgt ist, kann das Aufstiegsteil 2 um die nun durch die Zapfen 8 gebildete Schwenkachse verschwenkt werden, bis die als Füße des Aufstiegsteil 2 dienenden Enden der Führungsschienen 12, 13 auf dem Untergrund U stehen, auf dem auch der Sattelauflieger A steht.

Das Führungsteil 3 ist mit dem Aufstiegsteil 2 in einer Führung F gelagert, die durch zwei L-förmige Profilstücke 26,27 gebildet ist, deren Schenkel einander zugewandt in einem Abstand an der Unterseite des Ladebodens B montiert sind, dass das Führungsteil 3 und mit ihm das gegebenenfalls in das Führungsteil 3 eingeschobene Aufstiegsteil 2 mit leichtem Spiel in der Führung F verschiebbar ist. Der maximale Verschiebeweg in Richtung der Rückseite R des Sattelaufliegers A ist dabei durch die seitlich abstehenden Anschlagzapfen 15, 16 begrenzt, die gegen die Profilstücke 26 anschlagen, wenn das Führungsteil 3 seine maximale Auszugsstellung erreicht hat.

An den einander zugewandten Seiten der senkrecht vom Ladeboden B abstehenden Halteabschnitte der Profilstücke 26,27 ist jeweils ein in Richtung des jeweils anderen Profilstücks 27,26 abstehendes Rastglied 28 vorgesehen.

In den unteren, in Richtung der Vorderseite V des Sattelaufliegers A weisenden Schenkel S des Abschlussquerträgers Q sind zwei Rastöffnungen 29 eingeformt, deren Abstand und Form an den Abstand und die Form der rastenartigen Vorsprünge 18, 19 so angepasst sind, dass die Vorsprünge 18, 19, wenn sie in die Rastöffnungen 29 greifen, dort formschlüssig zumindest insoweit gehalten sind, dass ein selbsttätiges Verschieben der Ausziehleiter 1 in ihrer Längsrichtung verhindert ist, solange die Ausziehleiter 1 nicht gezielt soweit angehoben wird, dass der rastende Eingriff der Vorsprünge 18,19 in die Öffnungen 29 aufgehoben und das Ausziehteil 2 frei in seine Warteposition geschoben werden kann.

Hierzu wird das Ausziehteil 2 soweit angehoben, dass seine Vorsprünge 18,19 außer Eingriff mit den Rastöffnungen 29 kommen. Anschließend wird das Ausziehteil 2 soweit in das Führungsteil eingeschoben, dass seine maximale Einschubstellung erreicht ist. Daraufhin wird das Ausziehteil 2 nochmals in Richtung der Rückseite R des Sattelaufliegers A gezogen. Die Vorsprünge 18,19 werden so nach vorne gezogen, bis sie die Rastglieder 28 der Profilstücke 26,27 der Führung F umgreifen. Die Ausziehleiter 1 ist nun sicher in ihrer Wartestellung gehalten.

Für den Gebrauch wird die Ausziehleiter 1 zunächst über ein kurzes Stück in Richtung der Vorderseite V des Sattelaufliegers A geschoben, bis die Vorsprünge 18,19 außer Eingriff mit den Rastgliedern 28 kommen. Anschließend wird die Ausziehleiter 1 soweit in Richtung der Rückseite R des Sattelaufliegers A gezogen werden, bis die Anschlagzapfen 15,16 des Führungsteils 3 an den Profilstücken 26,27 anschlagen und die Vorsprünge 18, 19 rastenartig in die Rastöffnungen 29 greifen. Das Führungsteil 3 der Ausziehleiter 1 hängt von diesem Moment an dem unteren Schenkel S des Abschlussquerbalkens Q.

Nun wird nur noch der Aufstiegsteil 2 weiter gezogen, bis seine Zapfen 8 den vorderen Endabschnitt der Führungsschienen 12,13 erreicht haben. Anschließend kann der Aufstiegsteil 2 in Richtung des Untergrunds nach unten geschwenkt werden, bis die freien Enden der Holme 4,5 des Ausziehteils 2 sicher auf dem Untergrund stehen. Dabei ist das Ausziehteil 2 mit Erreichen der Aufstiegsstellung an dem Stützrohr 21 des Führungsteils 3 abgestützt, das gleichzeitig ein zu weites Verschwenken des Aufstiegsteils 2 verhindert.

### BEZUGSZEICHEN

- 1: Ausziehleiter
- 2: Ausziehteil
- 3: Führungsteil
- 4,5: Holme
- 6,7: Tritt-Sprossen
- 8: Zapfen
- 9: Rohr
- 10: Handgriff
- 11: Verlängerung
- 12,13: Führungsschienen
- 14: Führungsnut
- 15,16: Anschlagzapfen
- 17: gelochte Platte
- 18, 19: Vorsprünge (Formelemente)
- 20: vorderer Rand des Führungsteils 3
- 21: Stützrohr
- 22: oberer Schenkel der Führungsschienen 12, 13
- 23: Anlaufschräge
- 26,27: L-förmige Profilstücke
- 28: Rastglied
- 29: Rastöffnungen

- A: Sattelauflieger
- B: Ladeboden des Sattelaufliegers A
- C: Chassis des Sattelaufliegers A
- F: Führung
- L1,L2: Längsseiten des Sattelaufliegers A
- M: Zugmaschine
- P: Planenaufbau des Sattelaufliegers A
- R: Rückseite des Sattelaufliegers A
- S: Schenkel (Gurt)
- Q: Abschlussquerträger
- V: Vorderseite des Sattelaufliegers A
- W: Laufräderpaare
- Z: Sattelzug

## Patentansprüche

1. Fahrzeug für den Transport von Transportgütern mit einem Chassis (C), das mindestens ein der Rückseite (R) des Fahrzeugs (A) zugeordnetes Bauteil (Q) umfasst und an seiner Oberseite einen Ladeboden (B) trägt, auf dem das jeweilige Transportgut abstellbar ist, wobei an dem Chassis (C) zusätzlich eine unterhalb des Ladebodens (B) angeordnete Ausziehleiter (1) vorgesehen ist, die in einer ebenfalls von dem Chassis (C) getragenen Führung (F) verschiebbar gelagert ist, um die Ausziehleiter (1) aus einer Aufbewahrungsstellung, in der sie sich unterhalb des Ladebodens (B) befindet, in eine Gebrauchsstellung zu bringen, in der sie zum Untergrund (U), auf dem das Fahrzeug (A) steht, geklappt ist, um einen Aufstieg auf den Ladeboden (B) zu ermöglichen, wobei die Ausziehleiter (1) in einen ein Führungsteil (3) und einen Sprossen (7) aufweisenden Aufstiegsteil (2) unterteilt ist, von denen der Führungsteil (3) an der Führung (F) und das Aufstiegsteil (2) an dem Führungsteil (3) verschiebbar gelagert ist, und wobei an dem Führungsteil (3) im Bereich des Endabschnitts, in dem sich das dem Führungsteil (3) zugeordnete Ende des Aufstiegsteils (2) befindet, wenn das Aufstiegsteil (2) seine maximale Auszugsstellung in dem Führungsteil (3) erreicht hat, ein Schwenklager für die Verschwenkung des Aufstiegsteils (2) in seine Gebrauchsstellung ausgebildet ist, **dadurch gekennzeichnet, dass** an dem Führungsteil (3) ein Formelement (18,19) vorgesehen ist, das mit einem an dem Bauteil (Q) ausgebildeten Gegenelement in Eingriff kommt, wenn der Führungsteil (3) seine Auszugsstellung in der Führung (F) erreicht hat, so dass das Führungsteil (3) zusätzlich zu seiner Abstützung in der Führung (F) bei in Gebrauchsstellung geschwenktem Aufstiegsteil (2) an dem Bauteil (Q) hängt.

2. Fahrzeug nach Anspruch 1, **dadurch gekennzeichnet, dass** die Ausziehleiter (1) mit ihrer Führung (F) in Längsrichtung des Fahrzeugs ausgerichtet ist, so dass die Auszugsrichtung der Ausziehleiter (1) in Richtung der Rückseite (R) des Fahrzeugs (A) gerichtet ist.

3. Fahrzeug nach einem der voranstehenden Ansprüche, **dadurch gekennzeichnet, dass** das Bauteil, an dem das Formelements des Führungsteils (3) der Ausziehleiter (1) anschlägt, ein den rückseitigen Abschluss einer Tragstruktur des Chassis (C) bildender Querträger (Q) ist.

4. Fahrzeug nach Anspruch 3, **dadurch gekennzeichnet, dass** der Querträger (Q) als ein Profil mit einem Stegteil und einem davon in Richtung der Vorderseite (V) des Fahrzeugs abstehenden Gurtteil (S) ausgebildet ist, der das Gegenelement bildet, mit dem das Formelement des Führungsteils (3) der Ausziehleiter (1) in Eingriff kommt.

5. Fahrzeug nach einem der voranstehenden Ansprüche, **dadurch gekennzeichnet, dass** das Formelement hakenförmig ausgebildet ist.

6. Fahrzeug nach einem der voranstehenden Ansprüche, da**dur**ch **gekennzeichnet**, **dass** das Formelement nach Art einer Raste ausgebildet und an dem Bauteil (Q) eine Rastausnehmung vorgesehen ist, in die das Element einrastet, wenn das Führungsteil (3) seine maximale Auszugsstellung erreicht hat.

7. Fahrzeug nach einem der voranstehenden Ansprüche, **dadurch gekennzeichnet, dass** das Führungsteil (3) zwei parallel angeordnete und das Aufstiegssteil (2) zwischen sich aufnehmende Führungsholme aufweist und dass an jeder dem Ladeboden zugeordneten Oberseite der Führungsholme ein Vorsprung vorgesehen ist, der mit jeweils einem an dem Bauteil ausgebildeten Anschlag in Eingriff kommt, wenn das Führungsteil (3) seine Auszugsstellung in der Führung erreicht hat.

8. Fahrzeug nach einem der voranstehenden Ansprüche, **dadurch gekennzeichnet, dass** an dem Chassis (C) ein weiterer Anschlag vorgesehen ist, mit dem das jeweilige Element (18, 19) in Eingriff kommt, wenn das Führungsteil (3) in seine Endstellung geschoben ist.

9. Fahrzeug nach einem der voranstehenden Ansprüche, **dadurch gekennzeichnet, dass** an der Führung (F) ein Endanschlag vorgesehen ist, gegen den ein Anschlagelement (15, 16), das am Führungsteil (3) im Bereich seines anderen, vom Endabschnitt mit dem Schwenklager abgewandten Endes vorgesehen ist, anschlägt, wenn das Führungsteil (3) seine Auszugsstellung erreicht hat.

10. Fahrzeug nach einem der voranstehenden Ansprüche, **dadurch gekennzeichnet, dass** an der vom Ladeboden (B) abgewandten Seite im Bereich des mit dem Schwenklager versehenen Endabschnitts ein Stützanschlag (21) vorgesehen ist, gegen den sich das Aufstiegsteil (2) abstützt, wenn es in Gebrauchsstellung geschwenkt ist.

11. Fahrzeug nach einem der voranstehenden Ansprüche, **dadurch gekennzeichnet, dass** das Führungsteil (3) an seiner dem Ladeboden (B) zugeordneten Oberseite im Bereich des Endabschnitts, in dem sich das Schwenklager für das Aufstiegsteil (2) befindet, ein Plattenelement (17) trägt, das an seiner freien Oberseite eine Trittfläche bietet.

## Claims

1. Vehicle for the transport of transport goods having a chassis (C) which comprises at least one component (Q) which is associated with the rear side (R) of the vehicle (A) and which at the upper side thereof carries a loading floor (B), on which the respective transport goods can be deposited, wherein on the chassis (C) there is additionally provided an extension ladder (1) which is arranged below the loading floor (B) and which is displaceably supported in a guide (F) which is also carried by the chassis (C) in order to move the extension ladder (1) from a storage position, in which it is located below the loading floor (B), into a position for use, in which it is folded with respect to the ground (U) on which the vehicle (A) is standing in order to enable climbing onto the loading floor (B), wherein the extension ladder (1) is subdivided into a guiding portion (3) and a climbing portion (2) which has a rung (7), of which the guiding portion (3) is displaceably supported on the guide (F) and the climbing portion (2) is displaceably supported on the guiding portion (3), and wherein on the guiding portion (3) in the region of the end portion, in which the end of the climbing portion (2) which is associated with the guiding portion (3) is located, when the climbing portion (2) has reached its maximum extension position in the guiding portion (3), a pivot bearing for the pivoting of the climbing portion (2) into the position for use thereof is formed, **characterised in that** there is provided on the guiding portion (3) a forming element (18, 19) which moves into engagement with a counter-element formed on the component (Q) when the guiding portion (3) has reached its extension position in the guide (F) so that the guiding portion (3), in addition to being supported in the guide (F) when the climbing portion (2) is pivoted into the position for use, is suspended on the component (Q).

2. Vehicle according to claim 1, **characterised in that** the extension ladder (1) is orientated with its guide (F) in the longitudinal direction of the vehicle so that the extension direction of the extension ladder (1) is directed in the direction of the rear side (R) of the vehicle (A).

3. Vehicle according to anyone of the preceding claims, **characterised in that** the component which the forming element of the guiding potion (3) of the extension ladder (1) strikes is a transverse carrier (Q) which forms the rear terminating portion of a carrier structure of the chassis (C).

4. Vehicle according to claim 3, **characterised in that** the transverse carrier (Q) is constructed as a profile having a web portion and a belt portion (S) which protrudes therefrom in the direction of the front side (V) of the vehicle and which forms the counter-element, by means of which the forming element of the guiding portion (3) of the extension ladder (1) moves into engagement.

5. Vehicle according to any one of the preceding claims, **characterised in that** the forming element is constructed in the form of a hook.

6. Vehicle according to any one of the preceding claims, **characterised in that** the forming element is constructed in the form of a detent and there is provided in the component (Q) a locking recess in which the element engages when the guiding portion (3) has reached its maximum extension position.

7. Vehicle according to any one of the preceding claims, **characterised in that** the guiding portion (3) has two guiding struts which are arranged in a parallel manner and which receive the climbing portion (2) between them, and **in that** there is provided on each upper side of the guiding struts associated with the loading floor a projection which moves into engagement in each case with a stop formed on the component when the guiding portion (3) has reached its extension position in the guide.

8. Vehicle according to any one of the preceding claims, **characterised in that** on the chassis (C) there is provided another stop with which the respective element (18, 19) moves into engagement when the guiding portion (3) is pushed into the end position thereof.

9. Vehicle according to any one of the preceding claims, **characterised in that** on the guide (F) there is provided an end stop, against which a stop element (15, 16) which is provided on the guiding component (3) in the region of the other end facing away from the end portion with the pivot bearing strikes when the guiding portion (3) has reached its extension position.

10. Vehicle according to any one of the preceding claims, **characterised in that** at the side facing away from the loading floor (B) in the region of the end portion provided with the pivot bearing there is provided a support stop (21), against which the climbing portion (2) is supported when it is pivoted into the position for use.

11. Vehicle according to any one of the preceding claims, **characterised in that** the guiding portion (3), at the upper side thereof associated with the loading floor (B) in the region of the end portion in which the pivot bearing for the climbing portion (2) is located, carries a plate element (17) which provides a tread surface at the free upper side thereof.

## Revendications

1. Véhicule automobile pour le transport de marchandises doté d'un châssis (C) qui comporte au moins un composant (Q) associé au côté arrière (R) du véhicule automobile (A) et qui porte, sur sa partie supérieure, un plancher de chargement (B), sur lequel la marchandise respective à transporter peut être posée, une échelle télescopique (1) étant en outre prévue sur le châssis (C) sous le plancher de chargement (B) qui est logée mobile dans un guidage (F) porté également par le châssis (C) afin d'amener l'échelle télescopique (1) d'une position de repos, dans laquelle elle se trouve en-dessous du plancher de chargement (B), en une position d'utilisation, dans laquelle elle est rabattue vers le support (U) sur lequel se trouve le véhicule automobile (A) pour permettre une montée sur le plancher de chargement (B), l'échelle télescopique (1) étant subdivisée en une partie de montée (2) présentant une partie de guidage (3) et un échelon (7), dont la partie de guidage (3) est logée mobile sur le guidage (F) et la partie de montée (2) est logée mobile sur la partie de guidage (3), et un palier pivotant étant conçu pour le pivotement de la partie de montée (2) dans sa position d'utilisation sur la partie de guidage (3), dans la zone de la section terminale dans laquelle se trouve l'extrémité de la partie de montée (2) associée à la partie de guidage (3), lorsque la partie de montée (2) a atteint sa position d'extension maximale dans la partie de guidage (3), **caractérisé en ce qu'**un élément de forme (18, 19) est prévu sur la partie de guidage (3) qui entre en prise avec un contre-élément conçu sur le composant (Q) lorsque la partie de guidage (3) a atteint sa position d'extension dans le guidage (F) de sorte que la partie de guidage (3), outre son appui dans le guidage (F), dans le cas d'une partie de montée (2) pivotée dans la position d'utilisation, est accrochée au composant (Q).

2. Véhicule automobile selon la revendication 1, **caractérisé en ce que** l'échelle télescopique (1) est orientée avec son guidage (F) en direction longitudinale du véhicule automobile, de sorte que la direction d'extension de l'échelle télescopique (1) est orientée en direction du côté arrière (R) du véhicule automobile (A).

3. Véhicule automobile selon l'une des revendications précédentes, **caractérisé en ce que** le composant, sur lequel bute l'élément de forme de la partie de guidage (3) de l'échelle télescopique (1), est une traverse (Q) formant une terminaison arrière d'une structure de support du châssis (C).

4. Véhicule automobile selon la revendication 3, **caractérisé en ce que** la traverse (Q) est conçue comme un profilé avec une partie tige et une partie ceinture (S), saillante en direction du côté avant (V) du véhicule automobile, qui forme le contre-élément, avec lequel entre en prise l'élément de forme de la partie de guidage (3) de l'échelle télescopique (1).

5. Véhicule automobile selon l'une des revendications précédentes, **caractérisé en ce que** l'élément de forme est conçu en forme de crochet.

6. Véhicule automobile selon l'une des revendications précédentes, **caractérisé en ce que** l'élément de forme est conçu à la façon d'un cran d'arrêt et qu'un évidement d'accrochage est prévu sur le composant (Q) dans lequel l'élément s'emboîte lorsque la partie de guidage (3) a atteint sa position d'extension maximale.

7. Véhicule automobile selon l'une des revendications précédentes, **caractérisé en ce que** la partie de guidage (3) présente deux rails de guidage étant agencés parallèlement et logeant entre eux la partie de montée (2) et **en ce que**, sur chaque partie supérieure des rails de guidage associée au plancher de chargement, une saillie est prévue qui entre en prise avec respectivement une butée conçue sur le composant lorsque la partie de guidage (3) a atteint sa position d'extension dans le guidage.

8. Véhicule automobile selon l'une des revendications précédentes, **caractérisé en ce qu'**une autre butée est prévue sur le châssis (C) avec laquelle l'élément respectif (18, 19) entre en prise lorsque la partie de guidage (3) est poussée dans sa position de fin de course.

9. Véhicule automobile selon l'une des revendications précédentes, **caractérisé en ce qu'**une butée terminale est prévue dans le guidage (F) contre laquelle bute un élément de butée (15, 16) qui est prévu sur la partie de guidage (3), dans la zone de son autre extrémité opposée à la section terminale avec son palier de pivotement, lorsque la partie de guidage (3) a atteint sa position d'extension.

10. Véhicule automobile selon l'une des revendications précédentes, **caractérisé en ce que**, sur le côté opposé au plancher de chargement (B) dans la zone de la section terminale prévue avec le palier de pivotement, une butée d'appui (21) est prévue, contre laquelle s'appuie la partie de montée (2) lorsqu'elle est pivotée dans la position d'utilisation.

11. Véhicule automobile selon l'une des revendications précédentes, **caractérisé en ce que** la partie de guidage (3) porte, sur sa partie supérieure associée au plancher de chargement (B), dans la zone de la section terminale, dans laquelle se trouve le palier de pivotement pour la partie de montée (2), un élément en forme de plaque (17) qui offre une surface de marche sur sa partie supérieure libre.
